# EUROPEAN PATENT APPLICATION

(11) **EP 2 493 225 A1**
(43) Date of publication of application: **29.08.2012**
(21) Application number: 11305209.6
(22) Date of filing: 28.02.2011
(51) Int. Cl.: H04W 8/18, H04W 12/08

(54) **Method for roaming about a border for a subscriber to a mobile radio-communication network, corresponding device and system**

(71) Applicant: Gemalto SA, 92190 Meudon (FR)
(72) Inventor: Kuc, Jean-François, 13112, LA DESTROUSSE (FR)

(57) **Abstract**

The invention relates to a method (30) for roaming about a border for a subscriber to a mobile radio-communication network.

According to the invention, a token (22) being coupled to a terminal (12), the token storing a file comprising at least one information item relating to at least one forbidden mobile radio-communication network, as forbidden mobile radio-communication network file, the method comprises following steps:
- the token compares a current location information item relating to a home mobile radio-communication network to at least one location information item associated with a border relating to at least one country that is neighbour to a home country;
- if the current location information item relating to the home mobile radio-communication network is comprised within a location information item associated with a border relating to at least one neighbour country, then the token updates the forbidden mobile radio-communication network file by writing into the forbidden mobile radio-communication network file at least one information item relating to at least one authorized mobile radio-communication network for the at least one neighbour country;
- the token sends to the terminal the updated forbidden mobile radio-communication network file (310).

The invention also relates to corresponding device and system.

## Description

### Field of the invention:

The invention relates, in a general manner, to a method for roaming about a border for a subscriber to a mobile radio-communication network.

Furthermore, the invention also pertains to a device for roaming about a border for a subscriber to a mobile radio-communication network.

The device may be either a terminal or a token.

Within the present description, a token is an electronic object that is intended to communicate data with the outside world.

Moreover, the invention concerns, as well, a system for roaming about a border for a subscriber to a mobile radio-communication network. The system comprises a terminal and a token coupled to the terminal.

### State of the art:

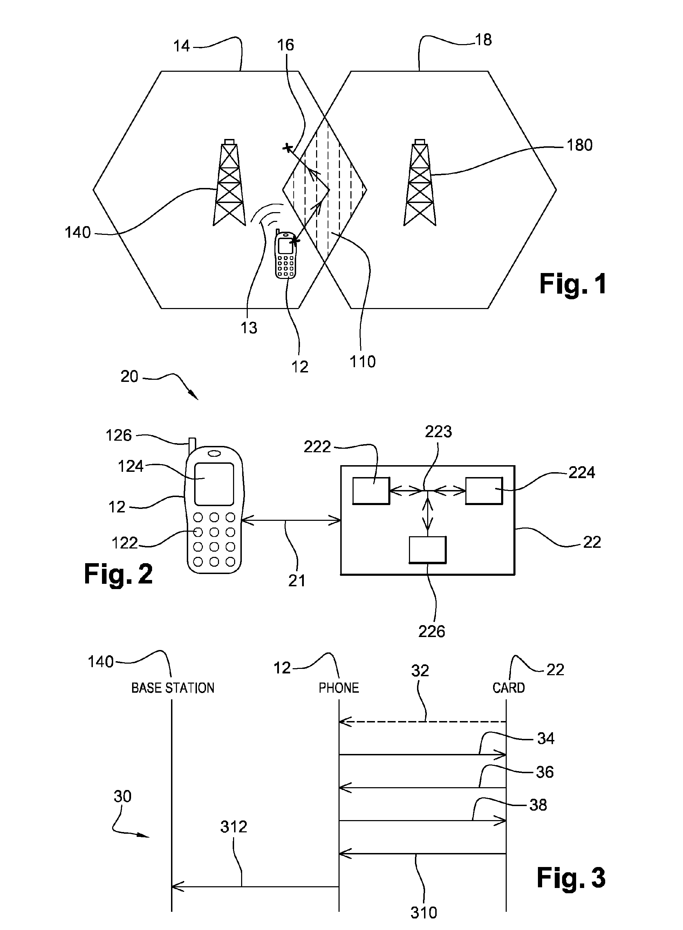

As shown in figure 1, a mobile telephone (or phone) 12 is located at a border of a home (mobile) (radio-communication) network cell 14 and moves on a path 16 that is covered by, besides one home network cell(s), one mobile network cell(s) 18 relating to a neighbour. Then, in such a radio environment, a communication between the mobile phone and a home network is transferred to a corresponding authorized neighbour network and vice versa.

However, such a transfer between home and neighbour networks generates notably a data traffic between the home and neighbour networks, in order to keep the communication with the mobile phone.

Thus, there is a need to avoid, at a border of a home network, to transfer a data communication from the home network to a neighbour network for a subscriber to the home network.

### Summary of the invention:

The invention proposes a solution for satisfying the just hereinabove specified need by providing a method for roaming about a border for a subscriber to a mobile radio-communication network.

According to the invention, a token being coupled to a terminal, the token storing a file comprising at least one information item relating to at least one forbidden mobile radio-communication network, as forbidden mobile radio-communication network file, the method comprises following steps:
- the token compares a current location information item relating to a home mobile radio-communication network to at least one location information item associated with a border relating to at least one country that is neighbour to a home country;
- if the current location information item relating to the home mobile radio-communication network is comprised within a location information item associated with a border relating to at least one neighbour country, then the token updates the forbidden mobile radio-communication network file by writing into the forbidden mobile radio-communication network file at least one information item relating to at least one authorized mobile radio-communication network for the at least one neighbour country;
- the token sends to the terminal the updated forbidden mobile radio-communication network file.

The principle of the invention consists in controlling, when the terminal is at a boundary between a home and a neighbour networks, a data communication between the home network and a terminal used by a subscriber to the home network, by preventing the terminal from carrying out a handover from the home to the neighbour network.

The terminal is forced preferably from a token associated with the terminal to keep a data communication between the terminal and the home network.

Thus, the token forbids the terminal to access any neighbour network(s) that is(are) previously registered as authorized.

The invention method allows continuing a data communication between the terminal and the home network when the terminal is located at a boundary between the home network and a neighbour network(s).

The invention method is automatically implemented.

Thus, a subscriber to a home mobile radio-communication network, as user of the terminal and the token that implement the invention method, is not involved.

The invention method is therefore convenient for the subscriber to a concerned mobile radio-communication network.

Contrary to the herein above specified known solution, due to the fact that, at a border of a home network, there is no transfer of a data communication from the home network to a previously authorized neighbour network for a subscriber to the home network, no data originating from the terminal is addressed to the neighbour network. Likewise, no data is exchanged between the home and the neighbour networks.

According to an additional aspect, the invention is a device for roaming about a border for a subscriber to a mobile radio-communication network.

According to the invention, the device storing a file comprising at least one information item relating to at least one forbidden mobile radio-communication network, as forbidden mobile radio-communication network file, the device is adapted to compare a current location information item relating to a home mobile radio-communication network to at least one location information item associated with a border relating to at least one country that is neighbour to a home country, and update, if the current location information item relating to the home mobile radio-communication network is comprised within a location information item associated with a border relating to at least one neighbour country, the forbidden mobile radio-communication network file by writing into the forbidden mobile radio-communication network file at least one information item relating to at least one authorized mobile radio-communication network for the at least one neighbour country.

The device may be either a terminal or a token that depends on a terminal by further sending to the terminal the updated forbidden mobile radio-communication network file.

According to still an additional aspect, the invention is a system for roaming about a border for a subscriber to a mobile radio-communication network. The system comprises a terminal and a token. The token is coupled to the terminal.

According to the invention, the token storing a file comprising at least one information item relating to at least one forbidden mobile radio-communication network, as forbidden mobile radio-communication network file, the token is adapted to:
- compare a current location information item relating to a home mobile radio-communication network to at least one location information item associated with a border relating to at least one country that is neighbour to a home country;
- update, if the current location information item relating to the home mobile radio-communication network is comprised within a location information item associated with a border relating to at least one neighbour country, the forbidden mobile radio-communication network file by writing into the forbidden mobile radio-communication network file at least one information item relating to at least one authorized mobile radio-communication network for the at least one neighbour country; and
- send to the terminal the updated forbidden mobile radio-communication network file.

### Brief description of the drawings:

Additional features and advantages of the invention will be more clearly understandable after reading a detailed description of one preferred embodiment of the invention, given as one indicative and non-limitative example, in conjunction with the following drawings:
- Figure 1 illustrates simplified two adjoining mobile network cells that have both a radio-coverage on a path taken by a user equipped with a mobile phone, as a terminal;
- Figure 2 represents a simplified diagram of one exemplary embodiment of a system comprising the mobile phone of figure 1 and a smart card, as a token, coupled to the phone, the system being adapted to forbid, at a border of a home (radio-communication) network, to communicate with a neighbouring network while the system is covered by the home and neighbour networks, according to the invention; and
- Figure 3 is an example of a flow of messages exchanged between the token and the terminal of the system of figure 2, so that the token forces the terminal to continue to communicate data with the home network only.

### Detailed description:

Herein under is considered a chip carried by a card, as a chip medium and token.

The chip may be nevertheless carried by any other medium that may have different form factors.

Instead of being a chip carried by a card, as a medium, the token may be an Embedded Secure Element (or ESE), as a chip soldered, possibly in a removable manner, on a Printed Circuit Board (or PCB) of a host computer device.

Instead of being carried by a card, the token may be carried by another medium, such as a dongle, for example, of the Universal Serial Bus (or USB) type.

Naturally, the herein below described embodiment is only for exemplifying purposes and is not considered to reduce the scope of the present invention.

Figure 1, already partially described within the introduction of the present document, shows, schematically, the phone 12, as terminal, that moves along the path 16.

The terminal may be any kind of electronic device that is able to exchange data, through a radio-communication link 13, with a data communicating entity. The terminal may be either fixed (i.e. not mobile) or mobile. The terminal may be a smart phone (i.e. a mobile phone with a Personal Digital Assistant (or PDA) capability), a set-top box, a tablet computer, a desktop computer, a laptop computer, a video player, an audio player, a portable TeleVision (or TV), a media-player, a game console, a netbook and/or a PDA.

The radio-communication link 13 may be either short or long, i.e. smaller or greater than around 10 m (or meters) for its corresponding wavelength.

However, the present invention is applicable between two radio-communication networks, regardless of their respective frequencies, types, among others. Each radio-communication network has its own subscriber.

Only two cells 14 and 18 have been schematically represented.

However, more than two cells may overlap each other and the overlapping area(s) of three (or more) cells is(are) still applicable to the terminal radio coverage environment.

A first base station 140 or a second base station 180, as data communicating entity, ensures data communication between a corresponding (mobile radio-communication network) first cell 14 or second cell 18 respectively and each user equipment that is under its own radio coverage.

The first base station 140 is connected to a first network, also termed home (radio-communication) network to which the phone subscriber is registered. The first network is a fixed network (not represented) connected to the first base station 140. The home network covers, for example, at least in part a geographical area corresponding to a home country. The home network may be connected to an Internet network.

The first cell 14 is therefore a home cell 14 while the second cell 18 is a foreign cell 18 for the phone 12.

The second base station 180 is connected to a second network, also termed foreign (radio-communication) network or visited network when the phone 12 communicates with the second base station 180. The foreign network covers, for example, at least in part other geographical area(s) that is(are) not covered by the home network.

The home and foreign networks may be operated by one or two (or more) operators, like a Mobile Network Operator(s) (or MNO) and/or a Mobile Virtual Network Operator(s) (or MNO), or on its or their behalf.

When there are two operators, they may have signed an agreement between each other, in order to ensure that a handover between two cells operated by two operators while authorizing to select the network of the other operator when roaming, from a home network to a foreign network. Thus, a phone subscriber to a first network, as home network, operated by a first operator is still able to communicate data while changing from a home cell relating to a home network to a foreign cell relating to a foreign network, as second network, operated by a second operator. The agreement may be mutual, i.e. when a phone subscriber to a second network operated by the second operator is still able to communicate data while changing from a home cell relating to a home network to a foreign cell relating to a foreign network operated by the first operator.

The data communication may be a phone call or a data session, such as an exchange of data between a user equipment and a server (not represented) connected to the corresponding base station 140. The server may be operated by a mobile radio-communication operator or on its behalf.

It is assumed that the path 16 taken by the phone 12 crosses a geographical area 110 (represented in an hashed and hatched manner) that is covered by the two cells 14 and 18. The geographical area 110 is therefore overlapped by the two corresponding radio-communication networks, namely the home and the foreign networks.

Typically, such an overlapped geographical area 110 is encountered in particular between two countries, namely a home and a foreign country, that are bordering between at least two corresponding cells, like a part of the south Alps between France and Italy.

When the phone 12 (either while the phone 12 is moving or not) is located within the overlapped geographical area 110, thanks to the invention, the phone 12 keeps a data communication with the first base station 140 of the home network (instead of transferring the data communication to the second base station 180 of the foreign network).

The data communication between the phone 12 and the first base station 140 may have been initiated from either the overlapped geographical area 110 or not.

Thus, thanks to the invention, the operator (MNO or MVNO) operating the first cell 14 keeps its subscriber(s) when the phone 12 is located (dynamically, i.e. while moving, or statically, i.e. remaining at the same location) within the overlapped geographical area 110, since the phone 12 communicates only with the home network (despite a radio-coverage by the foreign network).

Likewise, the operator (MNO or MVNO) operating the second cell 18 may keep its subscriber(s) when such a subscriber equipped with another phone is located within the overlapped geographical area 110, since the other phone communicates only with its home network (despite a radio-coverage by the foreign network).

Figure 2 illustrates, in a schematic manner, a system 20 for roaming about a border for a subscriber to a (mobile radio-communication) network.

The system 20 includes the phone 12, as a terminal, and a Subscriber Identity Module (or SIM) type smart card 22, as a token, coupled to the terminal.

For a sake of clarity and conciseness, the SIM type smart card 22 is termed hereinafter the card 22.

The phone 12, as handset and Mobile Equipment (or ME), is used, in particular, to benefit from a Man Machine Interface (or MMI) of the phone 12 and its phone function for its user, as a subscriber to the home network.

The phone 12 includes, among others, at least one microprocessor (not represented), at least one memory (not represented) and at least one Input/Output (or I/O) interface.

The phone microprocessor processes data originating from the phone memory or an external entity, such as the card 22 or the base station 140.

The phone microprocessor is connected, through one phone I/O interface, to the card 22.

The phone I/O interfaces includes an I/O interface, so as to exchange data with the card 22. The I/O interface with the card 22 may be an International Organization for Standardization (or ISO) 7816 interface, as a contact interface when the card 22 is lodged, in a removable manner, within the phone 12.

The phone I/O interfaces comprise preferably a keyboard 122, a display screen 124 and an antenna 126.

The keyboard 122 and the display screen 124 may be used for exchanging information, as MMI, between a phone user and the phone 12 or another entity(ies), like the card 22, to which the phone 12 is connected.

The antenna 126 is used for exchanging, through a long-range wireless link 13 with a base station relating to a mobile (radio-communication) network, and in particular the first base station 140.

The phone memory includes preferably at least one volatile memory, such as a cash memory, and at least one non-volatile memory.

The phone memory stores data, like user data, an Operating System (or OS) and at least one application allowing to authenticate the card 22 before a mobile radio-communication network to which the phone 12 is connected.

The home network may be a Global Service for Mobile (acronym for "GSM"), UTRAN (acronym for "Universal Mobile Telecommunications System (or UMTS) Terrestrial Radio Access Network"), EDGE (acronym for "Enhanced Data Rates for GSM Evolution"), GPRS (acronym for "General Packet Radio System"), WLAN (acronym for "Wide Local Area Network") CDMA and/or Long Term Evolution (or LTE) network(s).

The home network list is not exhaustive but only for exemplifying purposes and is not considered to reduce the scope of the present invention.

The phone 12 is able to connect to a home (mobile radio-communication) network, thanks to data provided by the card 22, like, for example, an identifier of a subscriber of the home network, an International Mobile Subscriber Identity (or IMSI).

As card 22, it may be, among others, a card with, as application, a Universal Identification Circuit Component (or UICC) for a 3G or LTE type network, a SIM for a 2G type network, a Universal SIM (or USIM) for a UMTS type network or a Removable Universal Identification Module (or RUIM) for a CDMA type network.

The card 22 is preferably connected, through an ISO contact link 21, to the phone 12, as host device.

The card 22 includes a chip. The chip comprises at least one microprocessor 222, as means for processing data, at least one memory 224, and at least one I/O interface 226 for communicating with the exterior of the token 22, which are internally linked together through a control and data bus 223.

The chip I/O interface 226 includes one I/O interface for exchanging data with the host computer, namely the phone 12, while using preferably Application Protocol Data Unit (or APDU).

The chip I/O interface 226 with the phone 12 may use a Single Wire Protocol (or SWP), an Internet Procotol (or IP), a USB protocol, a Bearer Independent Procotol (or BIP) and/or another data communication protocol(s).

The chip I/O interface 226 may include additional I/O interface(s), so as to communicate with other external respective entity(ies).

The chip memory 224 can be constituted by one or several EEPROM (acronym for "Electrically Erasable Programmable Read-Only Memory"), one or several ROM (for "Read Only Memory"), one or several Flash memories, as non-volatile memory(ies), and/or any other memory(ies) of different types, like one or several RAM (for "Random Access Memory"), as volatile memory(ies).

The chip memory 224 preferably stores securely an IMSI, as a unique number associated with all GSM, UMTS, Code Division Multiple Access (or CDMA) and/or LTE type network(s) mobile phone users. The IMSI is used to identify a subscriber in relation to one or several mobile radio-communication networks including at least one home network.

The chip memory 224 preferably stores securely a private key Ki that is used for generating data for authenticating a subscriber to the home network while using a predetermined algorithm.

The card 22 is able to retrieve its current location and track it.

The current location may include a Global Positioning System position retrieved from the phone 12 that addresses to a GPS system.

For example, the chip memory 224 may store securely a file comprising LOCal Information (or LOCI), like a so-termed Elementary File (or EF) comprising LOCI, denoted EF_{LOCI} that registers the location of the phone 12.

The chip memory 224 preferably stores securely a file comprising the home network, like a so-termed Elementary File (or EF) comprising one Home Public Land Mobile Network (or HPLMN), denoted EF_{IMSI}, for the subscriber to the home network.

The chip memory 224 preferably stores securely a file comprising a predetermined list of one (or several) selected preferred network(s), like a so-termed Elementary File (or EF) comprising one or several Public Land Mobile Networks (or PLMN), denoted EF_{PLMN-SEL}, for the subscriber to the home network.

The chip memory 224 preferably stores securely a file comprising a list of an information item(s) for each of one or several forbidden networks for one or several countries that are neighbour to the concerned home country, termed hereinafter forbidden (mobile radio-communication) network file, like a so-termed Elementary File (or EF) comprising a list of information item(s) relating to one or several Forbidden Public Land Mobile Networks (or FPLMN), denoted EF_{FPLMN}.

The chip memory 224 preferably stores securely a file comprising a predetermined list of one or several cell identifiers, as location information item(s), associated with a border relating to at least one country that is neighbour to the considered home country and an information item(s) relating to one or several authorized (foreign) (mobile radio-communication) networks for each of the neighbouring country(ies), also termed hereinafter neighbour authorized network file.

Such a neighbour authorized network file may have been either downloaded to the card 22 from a server connected to the home network or loaded into the card 22 during its manufacturing when personalizing it, preferably for each country that is a neighbour of the home country.

According to a preferred embodiment of the invention, the card 22 chip is arranged to:
- compare an identifier of a current cell, as a current location information item, relating to the home network to at least one predetermined identifier of a cell, as a location information item, associated with a border relating to one or several neighbour country(ies) of the home country;
- update, if the identifier of the current cell is an identifier of a cell relating to a home network, the forbidden network file by writing into it the concerned authorized network(s) for the concerned neighbouring country(ies); and
- send to the phone 12 the thus updated forbidden network file.

Alternately, instead of an identifier of a current cell, a current location information item is constituted by either a Location Area Code (or LAC) or a Location Area Information (or LAI).

The chip memory 224 stores preferably, besides an OS, at least one application algorithm. The application algorithm may be written in an object-oriented language, such as Java, also termed applet when developed in Java. According to such a corresponding embodiment, the chip memory 224 stores a Java Virtual Machine (or JVM) that interprets and executes the applet.

The application algorithm allows, when executed by the chip microprocessor 222, sending to the phone 12 the updated forbidden network file resulting from a detection of a location occupied by the phone 12 is still under the home network radio-coverage and is likely to be transferred to a foreign network, so as to force the phone 12 to keep the data communication with the home network.

The card 22 stores and carries out preferably one or several security functions.

The security functions may include a user authentication process to be used, in order to access data and/or an application(s) managed through and/or by the card 22.

To authenticate the user/subscriber to the home network, the card 22 may store an application for verifying a PIN. The PIN is securely stored within the chip memory 222 and to be input by a card 22 user. The card 22 compares input data with the stored PIN and, when the input data matches the stored PIN, the card 22 authorizes a running of the application, such as an application for authenticating a subscriber/card 22 before the home network, through the first base station 140.

The security functions may include an encryption/decryption process. The encryption/decryption process is to be used for exchanging data, through the phone 12, with the home network. Before sending any data, the data is encrypted by using the private key and the encryption algorithm stored within the chip memory 224.

The encryption algorithm may be a Data Encryption Standard (or DES), a triple DES or a Rivest Shamir and Adleman (or RSA) with a selected key length, like 1024 or more. The thus generated authentication data, as a resulting cryptogram, constitutes a signature of the subscriber to the home network/card 22.

The algorithms for encrypting/decrypting data are shared between the card 22 and its interlocutor, like a remote server, so that each of these entities is able to retrieve clear data sent by the other entity.

The chip microprocessor 222 processes data originating from and/or intended to any internal component and data originating from and/or intended to any external device through the chip I/O interface 226.

The chip microprocessor 222 executes, besides the OS, preferably at least one application algorithm that is accessible, i.e. can be launched, from either the phone 12 or the chip 22.

Once the application algorithm has been executed, an authentication application carried out by an entity of the home network, preferably after a successful user authentication (application) carried out by the card 22, is launched.

The user authentication application allows, when executed by the chip microprocessor 222, authenticating a card user at least once. The card user authentication application verifies preferably that the card user has given, through a phone MMI(s), data that matches with expected data, such as a PIN and/or biometrics print(s), stored previously, preferably in a secure manner, within the chip memory 224.

Figure 3 depicts an example of a message flow 30 that involves the phone 12, the card 22 and the first base station 140 relating to the home network.

It is assumed that:
- the first base station 140 belongs to a home network relating to a country A;
- the second base station 180 belongs to a foreign network F relating to a country B that is neighbour to the country A;
- the card 22 stores within the neighbour authorized network file, for the country B, a Mobile Country Code in combination with a Mobile Network Code (or MCC-MNC), as information item, relating to the authorized foreign network that includes the second base station 180.

Firstly, the phone 12 may send to the card 22 an event (not represented), like an event "status change", for informing the card 22 that the phone 12 has moved, i.e. has changed from a geographical place or a location, such as a cell.

Alternatively, the phone 12 may send to the card 22 an event (not represented) that a predetermined time out timer has elapsed, after that the card 22 has configured the time out timer with a predefined periodic time period value.

The card 22 may send to the phone 12, as a command, a request 32 for providing the card 22 with a location information item, like a command "provide LOCI", in which LOCI means LOCal Information.

Then, the phone 12 sends to the card 22 a current location information item(s) 34 relating to a home network, such as LOCI (LAI), local information with, as parameter, the location Area Information.

Instead of receiving its current location information item(s) from the phone 12, the card 22 may read the file EF_{LOCI}.

Once the card 22 knows its current location information item(s), such as a cell identifier, the card 22 compares the retrieved cell identifier to a list of cell identifiers at a border of the home network. The card 22 detects by consulting the neighbour authorized network file that the card 22 is under a radio coverage of the first cell 14 and that the first cell 14 is associated with a border relating to the country B that is neighbour to the considered home country A and an information item(s) F relating to one authorized network for the neighbouring country B. The card 22 deduces that the neighbour country is associated with an authorized network identified as F.

The card 22 modifies thus the forbidden network file, namely the EF_{FPLMN}, by introducing or adding into the forbidden network file the authorized network F associated with the neighbouring cell 18, namely the EF_{PLMN} relating to the corresponding foreign network. Thus, the network F associated with the neighbouring cell changes its status from "authorized" to "forbidden", once the forbidden network file will be interpreted by the phone 12.

The forbidden network file includes accordingly a list of forbidden networks among which the previously authorized network F becomes forbidden preventing from changing from the first cell 14 to the second cell 18, as the attached cell giving access to a mobile radio-communication network.

Optionally, the card 22 sends to the phone 12 data 36, as a first command for requesting to the phone 12 to read notably a recently modified forbidden network file accompanied with a second command for initializing a new authentication before a mobile radio-communication network to which the phone 12 is connected. The first command may be, for example, "Refresh FCN" in which FCN means File Change Notification and the second command may be "INIT".

Optionally, the phone 12 sends to the card 22 a command 38 for reading the forbidden network file, namely the EF_{FPLMN}.

The card 22 sends to the phone 12 the lastly modified forbidden network file 310, namely the EF_{FPLMN}.

The phone 12 stores in its cash memory the retrieved modified forbidden network file originating from the card 22.

The phone 12 reads the retrieved modified forbidden network file originating from the card 22. The phone 12 is thus not allowed to exchange data with the second base station 180 and does not only see the first base station 140.

Then, the phone 12 sends to the base station 140 a command 312, such as a command termed "INIT", for launching an authentication process before the home network, as the mobile radio-communication network to which the phone 12 is connected.

After a while, as soon as the card 22 detects that either the phone 12 does not receive any radio signal originating from the home mobile radio-communication network or the phone 12 receives a network error or an insufficient level of a signal received from the home mobile radio-communication network, the card 22 updates the forbidden network file. To update the forbidden network file, the card 22 erases or deletes, within the forbidden file, the information item(s) relating to one lastly introduced (or added) forbidden network(s) for the neighbour country(ies). The updated forbidden network file does no more include the lastly introduced forbidden network for the neighbour country(ies). In other words, the forbidden network file includes only the forbidden network list prior to the first update.

Then, the card 22 sends to the phone 12 a request (not represented) for letting read the updated forbidden network file accompanied with a request (not represented) for initializing a new authentication before a mobile radio-communication network to which the phone 12 is connected. The first command may be, for example, "Refresh FCN" in which FCN means File Change Notification and the second command may be "INIT".

Optionally, the phone 12 sends to the card 22 a command (not represented) for reading the forbidden network file, namely the EF_{FPLMN}.

The card 22 sends to the phone 12 the lastly modified forbidden network file (not represented), namely the EF_{FPLMN}.

The phone 12 reads the forbidden network file originating from the card 22. The forbidden network file becomes the initial forbidden network file, i.e. becomes the file that it was prior to its two updates (since its second update cancels its first update). The phone 12 is thus authorized to exchange data with the second base station 180.

Accordingly, the first update of the forbidden network file is temporary and is valid until the phone 12 leaves the first cell 14 at a border with the second cell 18.

## Claims

1. A method (30) for roaming about a border for a subscriber to a mobile radio-communication network,
**characterized in that**, a token (22) being coupled to a terminal (12), the token storing a file comprising at least one information item relating to at least one forbidden mobile radio-communication network, as forbidden mobile radio-communication network file, the method comprises following steps:
- the token compares a current location information item relating to a home mobile radio-communication network to at least one location information item associated with a border relating to at least one country that is neighbour to a home country;
- if the current location information item relating to the home mobile radio-communication network is comprised within a location information item associated with a border relating to at least one neighbour country, then the token updates the forbidden mobile radio-communication network file by writing into the forbidden mobile radio-communication network file at least one information item relating to at least one authorized mobile radio-communication network for the at least one neighbour country;
- the token sends to the terminal the updated forbidden mobile radio-communication network file (310).

2. Method according to claim 1, wherein, prior to a sending from the token to the terminal of the updated forbidden mobile radio-communication network file, the token sends to the terminal a request (36) for re-initializing the terminal, so as to allow the terminal to authenticate before a mobile radio-communication network.

3. Method according to claim 1 or 2, wherein, prior to a sending from the token to the terminal of the updated forbidden mobile radio-communication network file, the terminal sends to the token a request (38) for reading the updated forbidden mobile radio-communication network file.

4. Method according to any of claims 1 to 3, wherein, prior to a comparison between the current location information item relating to the home mobile radio-communication network and the location information item associated with the border relating to at least one neighbour country, the token reads a file comprising at least one location information item or the terminal sends to the token the current location information item (34) relating to the home mobile radio-communication network.

5. Method according to claim 4, wherein, prior to a sending from the terminal to the token of the current location information item relating to the home mobile radio-communication network, the token sends to the terminal a request (32) for providing the token with a location information item.

6. Method according to claim 4 or 5, wherein, prior to the sending from the terminal to the token of the current location information item relating to the home mobile radio-communication network, the terminal sends to the token data relating to an event for informing that the terminal has moved.

7. Method according to any of claims 1 to 6, wherein the at least one location information item associated with the border relating to at least one neighbour country includes at least one predetermined identifier of a cell relating to a home mobile radio-communication network.

8. Method according to any of claims 1 to 7, wherein the token detects that either the terminal does not receive any radio signal originating from the home mobile radio-communication network or the terminal receives a network error or an insufficient level of a signal received from the home mobile radio-communication network, the token updates the forbidden mobile radio-communication network file by erasing within the forbidden mobile radio-communication network file the at least one information item relating to at least one lastly updated forbidden mobile radio-communication network for the at least one neighbour country, and the token sends to the terminal, on the one hand, a request for letting read the updated forbidden mobile radio-communication network file, and, on the other hand, a request for authenticating the subscriber to a foreign authorized mobile radio-communication network.

9. A device (12 or 22) for roaming about a border for a subscriber to a mobile radio-communication network,
**characterized in that**, the device storing a file comprising at least one information item relating to at least one forbidden mobile radio-communication network, as forbidden mobile radio-communication network file, the device is adapted to:
- compare a current location information item relating to a home mobile radio-communication network to at least one location information item associated with a border relating to at least one country that is neighbour to a home country;
- update, if the current location information item relating to the home mobile radio-communication network is comprised within a location information item associated with a border relating to at least one neighbour country, the forbidden mobile radio-communication network file by writing into the forbidden mobile radio-communication network file at least one information item relating to at least one authorized mobile radio-communication network for the at least one neighbour country.

10. A system (20) for roaming about a border for a subscriber to a mobile radio-communication network, the system comprising a terminal (12) and a token (22), the token being coupled to the terminal,
**characterized in that**, the token storing a file comprising at least one information item relating to at least one forbidden mobile radio-communication network, as forbidden mobile radio-communication network file, the token is adapted to:
- compare a current location information item relating to a home mobile radio-communication network to at least one location information item associated with a border relating to at least one country that is neighbour to a home country;
- update, if the current location information item relating to the home mobile radio-communication network is comprised within a location information item associated with a border relating to at least one neighbour country, the forbidden mobile radio-communication network file by writing into the forbidden mobile radio-communication network file at least one information item relating to at least one authorized mobile radio-communication network for the at least one neighbour country; and
- send to the terminal the updated forbidden mobile radio-communication network file.
